# EUROPEAN PATENT APPLICATION

(11) **EP 3 522 095 A1**
(43) Date of publication of application: **07.08.2019**
(21) Application number: 18202886.0
(22) Date of filing: 26.10.2018
(51) Int. Cl.: G06Q 30/02

(54) **SYSTEMS AND METHODS FOR MAKEUP CONSULTATION USING AN IMPROVED USER INTERFACE**

(30) Priority: 06.02.2018 US 201862627001 P; 08.06.2018 US 201816003170
(71) Applicant: Perfect Corp., 231 New Taipei City (TW)
(72) Inventor: LEE, Wan-Chuan, 514 Changhua County (TW); CHEN, Yu-Jie, 223 New Taipei City (TW)
(74) Representative: Stöckeler, Ferdinand

(57) **Abstract**

A computing device initiates a video conferencing session with a remote computing device utilized by a makeup professional and accesses a dataset in a data store, the dataset comprising a plurality of makeup templates, wherein each of the makeup templates specifies application of cosmetic effects for achieving a different cosmetic result. The computing device displays a first user interface that includes a virtual mirror window depicting a live video feed of the user's facial region, a second window depicting a live video feed of the makeup professional, and a plurality of graphical thumbnail representations, each of the graphical thumbnail representations corresponding to a cosmetic effect. A selection of one of the graphical thumbnail representations is obtained, and a second user interface is displayed that includes plurality of sub-windows each depicting virtual application of a cosmetic effect. A selection of one of the sub-windows is obtained and the first user interface is updated accordingly with the selected cosmetic effect.

## Description

### CROSS-REFERENCE TO RELATED APPLICATION

This application claims priority to, and the benefit of, U.S. Provisional Patent Application entitled, "Smart BA Chooser," having Serial No. 62/627,001, filed on February 6, 2018, which is incorporated by reference in its entirety.

### TECHNICAL FIELD

The present disclosure generally relates to media editing and more particularly, to systems and methods for performing virtual application of cosmetic effects using an improved user interface during a makeup consultation session.

### BACKGROUND

Individuals invest a substantial amount of money in makeup tools and accessories. However, it can be challenging to achieve the same results as a makeup professional even with the aid of conventional self-help guides. In particular, it can be difficult and time consuming for a customer to try on various types of makeup at the same time when consulting with a makeup professional.

### SUMMARY

In accordance with one embodiment, a computing device initiates a video conferencing session with a remote computing device utilized by a makeup professional. The computing device accessing a dataset in a data store, the dataset comprising a plurality of makeup templates, where each of the makeup templates specifies application of cosmetic effects for achieving a different cosmetic result. The computing device displays a first user interface to a user of the client device, the first user interface comprising a virtual mirror window depicting a live video feed of the user's facial region, a second window depicting a live video feed of the makeup professional, and a plurality of graphical thumbnail representations, each of the graphical thumbnail representations corresponding to a cosmetic effect. The computing device obtains a selection of one of the graphical thumbnail representations and displays a second user interface to the user, the second user interface comprising a plurality of sub-windows each depicting virtual application of a cosmetic effect corresponding to the selected graphical thumbnail representation, each of the plurality of sub-windows corresponding to one of the makeup templates in the dataset. The computing device obtains a selection of one of the sub-windows in the second user interface and transitions back to the first user interface, the first user interface comprising the virtual mirror window depicting virtual application of the cosmetic effect associated with the selected sub-window.

Another embodiment is a system that comprises a memory storing instructions and a processor coupled to the memory. The processor is configured by the instructions to initiate a video conferencing session with a remote computing device utilized by a makeup professional. The processor is further configured to access a dataset in a data store, the dataset comprising a plurality of makeup templates, where each of the makeup templates specifies application of cosmetic effects for achieving a different cosmetic result. The processor is further configured to display a first user interface to a user of the system, the first user interface comprising a virtual mirror window depicting a live video feed of the user's facial region, a second window depicting a live video feed of the makeup professional, and a plurality of graphical thumbnail representations, each of the graphical thumbnail representations corresponding to a cosmetic effect. The processor is further configured to obtain a selection of one of the graphical thumbnail representations and display a second user interface to the user, the second user interface comprising a plurality of sub-windows each depicting virtual application of a cosmetic effect corresponding to the selected graphical thumbnail representation, each of the plurality of sub-windows corresponding to one of the makeup templates in the dataset. The processor is further configured to obtain a selection of one of the sub-windows in the second user interface and transition back to the first user interface, the first user interface comprising the virtual mirror window depicting virtual application of the cosmetic effect associated with the selected sub-window.

Another embodiment is a non-transitory computer-readable storage medium storing instructions to be implemented by a computing device having a processor, wherein the instructions, when executed by the processor, cause the computing device to initiate a video conferencing session with a remote computing device utilized by a makeup professional. The processor is further configured to access a dataset in a data store, the dataset comprising a plurality of makeup templates, where each of the makeup templates specifies application of cosmetic effects for achieving a different cosmetic result. The processor is further configured to display a first user interface to a user of the client device, the first user interface comprising a virtual mirror window depicting a live video feed of the user's facial region, a second window depicting a live video feed of the makeup professional, and a plurality of graphical thumbnail representations, each of the graphical thumbnail representations corresponding to a cosmetic effect. The processor is further configured to obtain a selection of one of the graphical thumbnail representations and display a second user interface to the user, the second user interface comprising a plurality of sub-windows each depicting virtual application of a cosmetic effect corresponding to the selected graphical thumbnail representation, each of the plurality of sub-windows corresponding to one of the makeup templates in the dataset. The processor is further configured to obtain a selection of one of the sub-windows in the second user interface and transition back to the first user interface, the first user interface comprising the virtual mirror window depicting virtual application of the cosmetic effect associated with the selected sub-window.

Other systems, methods, features, and advantages of the present disclosure will be or become apparent to one with skill in the art upon examination of the following drawings and detailed description. It is intended that all such additional systems, methods, features, and advantages be included within this description, be within the scope of the present disclosure, and be protected by the accompanying claims.

### BRIEF DESCRIPTION OF THE DRAWINGS

Various aspects of the disclosure can be better understood with reference to the following drawings. The components in the drawings are not necessarily to scale, with emphasis instead being placed upon clearly illustrating the principles of the present disclosure. Moreover, in the drawings, like reference numerals designate corresponding parts throughout the several views.
FIG. 1 is a block diagram of a computing device for implementing improved user interfaces for efficient selection of cosmetic effects in a virtual cosmetic application platform in accordance with various embodiments of the present disclosure.
FIG. 2 is a schematic diagram of the computing device of FIG. 1 in accordance with various embodiments of the present disclosure.
FIG. 3 is a top-level flowchart illustrating examples of functionality implemented as portions of the computing device of FIG. 1 for implementing improved user interfaces for efficient selection of cosmetic effects in a virtual cosmetic application platform according to various embodiments of the present disclosure.
FIG. 4 illustrates an example of a first user interface provided on a display of the computing device in FIG. 1 according to various embodiments of the present disclosure.
FIG. 5 illustrates selection of one of the cosmetic effects in the first user interface provided on a display of the computing device in FIG. 1 according to various embodiments of the present disclosure.
FIG. 6 illustrates an example of a second user interface provided on a display of the computing device in FIG. 1 according to various embodiments of the present disclosure.
FIG. 7 illustrates selection of one of the sub-windows in the second user interface provided on a display of the computing device in FIG. 1 according to various embodiments of the present disclosure.
FIG. 8 illustrates transition by the computing device in FIG. 1 from the second user interface back to the first user interface upon selection of one of the sub-windows according to various embodiments of the present disclosure.
FIG. 9 illustrates use of a gesture performed in the second user interface provided on a display of the computing device in FIG. 1 for removing an unwanted sub-window according to various embodiments of the present disclosure.
FIG. 10 illustrates replacement of the selected sub-window in FIG. 9 with another sub-window corresponding to another makeup template according to various embodiments of the present disclosure.
FIG. 11 illustrates the first user interface provided on a display of the computing device in FIG. 1 after multiple iterations where the user has selected multiple cosmetic effects associated with makeup templates according to various embodiments of the present disclosure.

### DETAILED DESCRIPTION

Various embodiments are disclosed for providing an improved makeup consultation platform that allows individuals to interface with makeup professionals and efficiently select cosmetic effects that specify the virtual application of one or more cosmetic products to achieve a desired cosmetic result. Specifically, embodiments are directed to implementing improved user interfaces utilized by a user during a makeup consultation session with a makeup professional. For some embodiments, a picture-in-picture (PIP) configuration is utilized whereby a virtual mirror window depicting a live video feed of the user's facial region is shown, and a PIP window depicting a live video feed of the makeup professional is also shown. The user interface also includes various graphical thumbnail representations, where each of the graphical thumbnail representations corresponds to a cosmetic effect (e.g., eye liner, lipstick).

The user selects a desired cosmetic effect, which then causes another user interface to be shown that includes an array of sub-windows associated with different makeup templates, where each sub-window depicts the selected cosmetic effect. Notably, as each sub-window corresponds to a different makeup template, each sub-window depicts a variation of the selected cosmetic effect (*e.g*., lip sticks of varying colors). The user selects a sub-window depicting a desired cosmetic result. This causes the first user interface to be updated with the virtual mirror now depicting the selected cosmetic result virtually applied to the user's facial region.

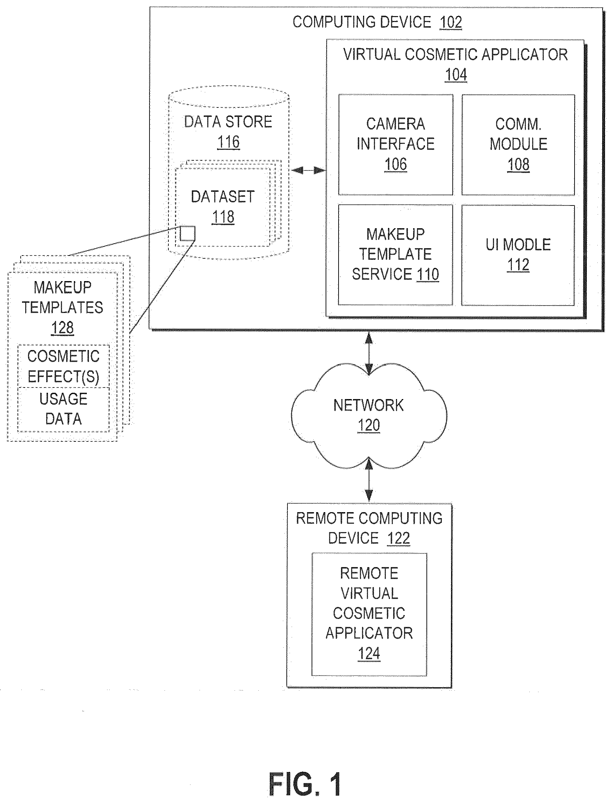

A description of a system for implementing a makeup consultation platform is now described followed by a discussion of the operation of the components within the system. FIG. 1 is a block diagram of a computing device 102 in which improved user interfaces for efficient selection of cosmetic effects in a virtual cosmetic application platform disclosed herein may be implemented. The computing device 102 may be embodied as a computing device such as, but not limited to, a smartphone, a tablet computing device, a laptop, and so on.

A virtual cosmetic applicator 104 executes on a processor of the computing device 102 thereby causing the computing device 102 to perform the operations/functions for implementing the features disclosed herein. The virtual cosmetic applicator 104 includes a camera interface 106, a communication module 108, a makeup template service 110, and a user interface (Ul) module 112.

The camera interface 106 is configured to obtain either a live video feed or digital images of a user of the computing device 102, where the live video feed and digital images may be captured by a front facing camera integrated into the computing device 102. Alternatively, the camera interface 106 may obtain the live video feed and digital images from an external digital recording device coupled to the computing device 102 or from another computing device with digital recording capabilities.

The communication module 108 is configured to initiate a video conferencing session with a remote virtual cosmetic applicator 124 executing on a remote computing device 122 utilized by a makeup professional for purposes of conducting a makeup consultation session. The communication module 108 is communicatively coupled to the remote computing device 122 via a network 120 such as, for example, the Internet, intranets, extranets, wide area networks (WANs), local area networks (LANs), wired networks, wireless networks, or other suitable networks, *etc.,* or any combination of two or more such networks.

The makeup template service 110 is configured to access a dataset 118 in a data store 116, where each dataset 118 comprises a plurality of makeup templates 128. The dataset 118 accessed by the makeup template service 110 may be one selected by the user of the computing device 102 or one that is selected by the makeup professional via the remote computing device 122. Each of the makeup templates 128 specifies virtual application of cosmetic effects onto a digital image or live video feed of the user's facial region for achieving a different cosmetic result. Each makeup template 128 also includes usage data, which reflects when and/or how often each cosmetic effect has been selected by the user. As described in more detail below, this usage data is utilized to determine which makeup templates 128 is selected and presented to the user in a user interface.

For some embodiments, the plurality of makeup templates 128 in the dataset 118 may be randomly selected based on one or more brands of makeup products. Suppose, for example, that there are twenty different colors of lipsticks. For some embodiments, the makeup template service 110 may be configured to automatically select nine of the twenty lipstick colors to display to the user through the use of sub-windows, as described in more detail below. The nine lipstick colors in this example may be associated with one particular brand of lipstick.

The UI module 112 is configured to display various user interfaces during the makeup consultation sessions. Specifically, the UI module 112 displays a first user interface to the user of the computing device 102, where the first user interface comprises a virtual mirror window depicting a live video feed or digital image of the user's facial region provided by the camera interface 106. The first user interface also includes a second window depicting a live video feed of the makeup professional in addition to a plurality of graphical thumbnail representations that each corresponds to a cosmetic effect.

The UI module 112 is further configured to obtain a selection of one of the graphical thumbnail representations corresponding to different cosmetic effects. Selection of one of the graphical thumbnail representations causes the UI module 112 to display a second user interface to the user. The second user interface comprises a plurality of sub-windows that each depicts virtual application of a cosmetic effect corresponding to the selected graphical thumbnail representation. Furthermore, each of the plurality of sub-windows corresponds to one of the makeup templates in the dataset 118.

The Ul module 112 obtains a selection of one of the sub-windows in the second user interface and transitions back to the first user interface. At this point, the first user interface is updated and now displays the virtual mirror window depicting virtual application of the cosmetic effect associated with the selected sub-window. The first user interface also displays the second window depicting the live video feed of the makeup professional. As described in more detail below, the UI module 112 is also configured to obtain selections of or more unwanted sub-windows displayed in the second user interface to be removed from view. For some embodiments, the sub-windows selected to be removed from view are replaced with other sub-windows corresponding to other makeup templates in the selected dataset 118.

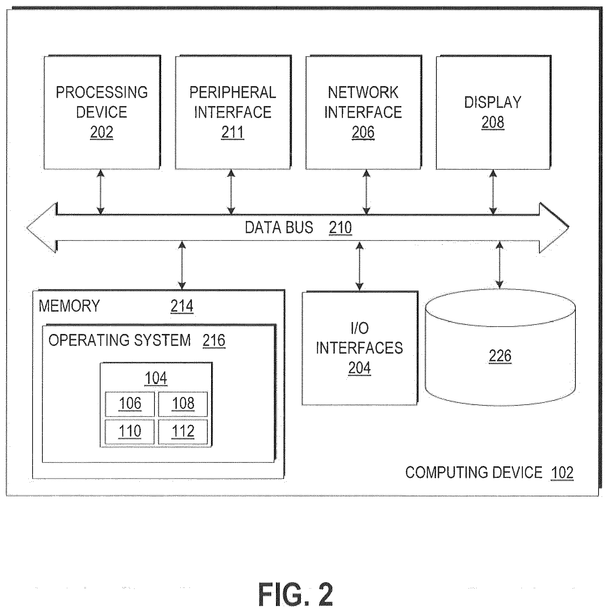

FIG. 2 illustrates a schematic block diagram of the computing device 102 in FIG. 1. The computing device 102 may be embodied in any one of a wide variety of wired and/or wireless computing devices, such as a desktop computer, portable computer, dedicated server computer, multiprocessor computing device, smart phone, tablet, and so forth. As shown in FIG. 2, the computing device 102 comprises memory 214, a processing device 202, a number of input/output interfaces 204, a network interface 206, a display 208, a peripheral interface 211, and mass storage 226, wherein each of these components are connected across a local data bus 210.

The processing device 202 may include any custom made or commercially available processor, a central processing unit (CPU) or an auxiliary processor among several processors associated with the computing device 102, a semiconductor based microprocessor (in the form of a microchip), a macroprocessor, one or more application specific integrated circuits (ASICs), a plurality of suitably configured digital logic gates, and other well known electrical configurations comprising discrete elements both individually and in various combinations to coordinate the overall operation of the computing system.

The memory 214 may include any one of a combination of volatile memory elements (*e.g.,* random-access memory (RAM, such as DRAM, and SRAM, *etc*.)) and nonvolatile memory elements (*e.g*., ROM, hard drive, tape, CDROM, *etc*.). The memory 214 typically comprises a native operating system 216, one or more native applications, emulation systems, or emulated applications for any of a variety of operating systems and/or emulated hardware platforms, emulated operating systems, *etc.* For example, the applications may include application specific software which may comprise some or all the components of the computing device 102 depicted in FIG. 1. In accordance with such embodiments, the components are stored in memory 214 and executed by the processing device 202, thereby causing the processing device 202 to perform the operations/functions for implementing the features disclosed herein. One of ordinary skill in the art will appreciate that the memory 214 can, and typically will, comprise other components which have been omitted for purposes of brevity. For some embodiments, the components in the computing device 102 may be implemented by hardware and/or software.

Input/output interfaces 204 provide any number of interfaces for the input and output of data. For example, where the computing device 102 comprises a personal computer, these components may interface with one or more user input/output interfaces 204, which may comprise a keyboard or a mouse, as shown in FIG. 2. The display 208 may comprise a computer monitor, a plasma screen for a PC, a liquid crystal display (LCD) on a hand held device, a touchscreen, or other display device.

In the context of this disclosure, a non-transitory computer-readable medium stores programs for use by or in connection with an instruction execution system, apparatus, or device. More specific examples of a computer-readable medium may include by way of example and without limitation: a portable computer diskette, a random access memory (RAM), a read-only memory (ROM), an erasable programmable read-only memory (EPROM, EEPROM, or Flash memory), and a portable compact disc read-only memory (CDROM) (optical).

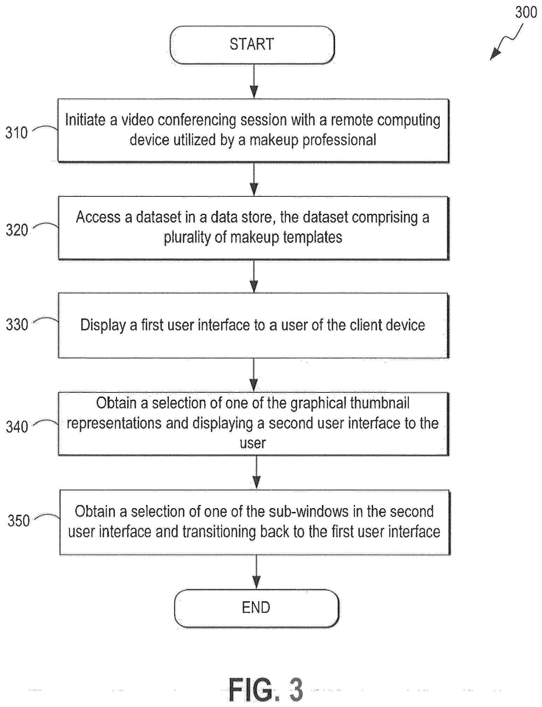

Reference is made to FIG. 3, which is a flowchart 300 in accordance with various embodiments for implementing improved user interfaces for efficient selection of cosmetic effects in a virtual cosmetic application platform performed by the computing device 102 of FIG. 1. It is understood that the flowchart 300 of FIG. 3 provides merely an example of the different types of functional arrangements that may be employed to implement the operation of the various components of the computing device 102. As an alternative, the flowchart 300 of FIG. 3 may be viewed as depicting an example of steps of a method implemented in the computing device 102 according to one or more embodiments.

Although the flowchart 300 of FIG. 3 shows a specific order of execution, it is understood that the order of execution may differ from that which is depicted. For example, the order of execution of two or more blocks may be scrambled relative to the order shown. Also, two or more blocks shown in succession in FIG. 3 may be executed concurrently or with partial concurrence. It is understood that all such variations are within the scope of the present disclosure.

At block 310, the computing device 102 initiates a video conferencing session with a remote computing device 122 (FIG. 1) utilized by a makeup professional. In block 320, the computing device 102 accesses a dataset 118 in a data store 116, the dataset comprising a plurality of makeup templates 128 (FIG. 1), wherein each of the makeup templates specifies application of cosmetic effects for achieving a different cosmetic result. For some embodiments, the computing device 102 accesses the dataset 118 in response to selection of the dataset by the makeup professional via the remote virtual cosmetic applicator 124 executing on the remote computing device 122. For other embodiments, the computing device 102 accesses the dataset 118 in response to selection of the dataset 118 by the user of the computing device 102.

In block 330, the computing device 102 displays a first user interface to the user of the computing device 102, where the first user interface comprises a virtual mirror window that depicts a live video feed of the user's facial region. The first user interface also comprises a second window depicting a live video feed of the makeup professional, and a plurality of graphical thumbnail representations. Each of the graphical thumbnail representations corresponding to a cosmetic effect.

For some embodiments, in the first user interface, the second window depicting the live video feed of the makeup professional comprises a picture-in-picture (PIP) window displayed in the virtual mirror window depicting the live video feed of the user's facial region. For some embodiments, a predetermined number of sub-windows are displayed in the second user interface, where the displayed number of sub-windows corresponds to a predetermined number of makeup templates 128 in the dataset 118. Suppose, for example, that the dataset 118 contains a total of twelve makeup templates 128. In this example, the predetermined number may correspond to the eight most recently used makeup templates 128 within the dataset 118. Thus, only eight sub-windows corresponding to these makeup templates 128 are displayed in the second user interface. This predetermined number of sub-windows displayed in the second user interface may correspond to the most utilized makeup templates in the dataset, the most recently utilized makeup templates in the dataset, and so on, where such information is stored in the usage data corresponding to each makeup template 128.

In block 340, the computing device 102 obtains a selection of one of the graphical thumbnail representations and displays a second user interface to the user. The second user interface comprises a plurality of sub-windows that each depicts virtual application of a cosmetic effect corresponding to the selected graphical thumbnail representation. Each of the plurality of sub-windows corresponds to one of the makeup templates in the dataset. For some embodiments, the second user interface also displays the plurality of graphical thumbnail representations, where each of the graphical thumbnail representations corresponds to a cosmetic effect. This allows the user to select cosmetic effects in either the first user interface or the second user interface.

In block 350, the computing device 102 obtains a selection of one of the sub-windows in the second user interface and transitions back to the first user interface. The first user interface now shows the virtual mirror window depicting virtual application of the cosmetic effect associated with the selected sub-window. The first user interface also includes the second window depicting the live video feed of the makeup professional.

In some embodiments, the computing device 102 is further configured to obtain a gesture on one of the plurality of sub-windows in the second user interface and replace the sub-window on which the gesture was performed with another sub-window associated with a different makeup template. This gesture may be obtained by either detecting the gesture performed on a touchscreen interface of the computing device 102 or detecting the gesture performed using a mouse device coupled to the computing device 102. Thereafter, the process in FIG. 3 ends.

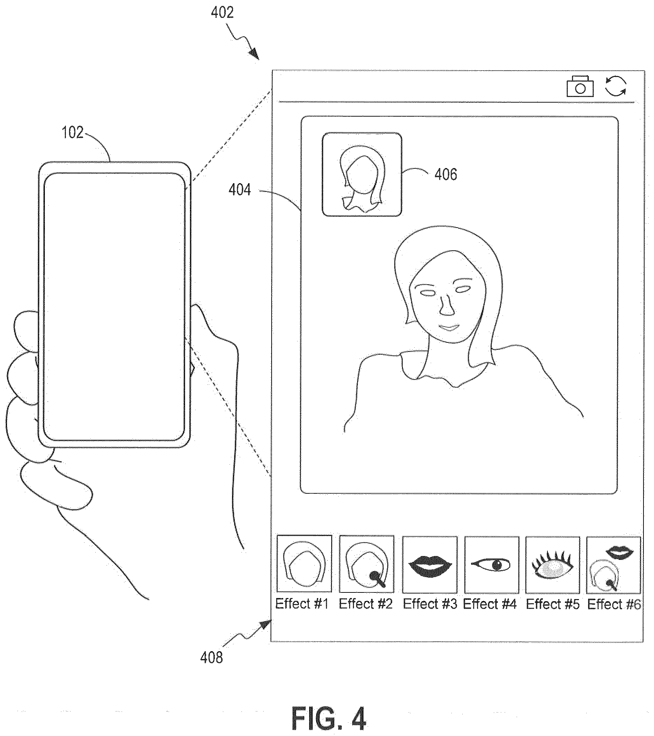

Having described the basic framework of a system for implementing improved user interfaces for efficient selection of makeup templates in a virtual cosmetic application platform, reference is made to the following figures, which illustrate various features according to various embodiments. FIG. 4 illustrates an example of a first user interface 402 provided on a display of the computing device 102. As shown, the first user interface 402 includes a virtual mirror window 404 that depicts a live video feed of the user's facial region. Alternatively, the virtual mirror 404 may depict a still image of the user's facial region. The first user interface 402 also includes a second window 406 that depicts a live video feed of the makeup professional. As discussed above, the second window 406 depicting the live video feed of the makeup professional may be implemented as a picture-in-picture (PIP) window displayed in the virtual mirror window 404 depicting the live video feed of the user's facial region.

The first user interface 402 also includes a plurality of graphical thumbnail representations 408 that each correspond to a particular cosmetic effect. In the example shown, graphical thumbnail representations for different effects (Effect #1 to Effect #5) are shown. To further illustrate, Effect #1 may correspond to a first cosmetic effect (e.g., application of foundation to the facial region), Effect #2 may correspond to a second cosmetic effect (e.g., application of blush to the facial region), Effect #3 may correspond to a third cosmetic effect (e.g., application of lipstick), Effect #4 may correspond to a fourth cosmetic effect (e.g., application of eye liner), and Effect #5 may correspond to a fifth cosmetic effect (e.g., application of makeup to eye lashes), and so on. Note that each effect (e.g., Effect #1) is not limited to a single cosmetic effect and may correspond to a combination of cosmetic effects. For example, in the example user interface shown, Effect #6 corresponds to both the application of foundation and the application of lipstick to the facial region.

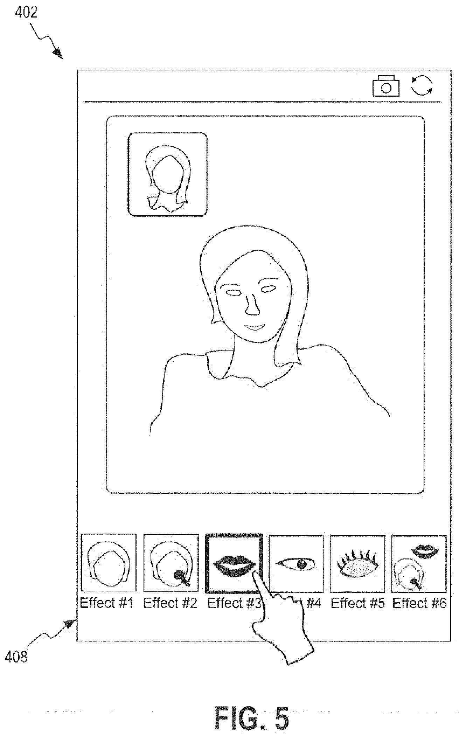

FIG. 5 illustrates selection of one of the cosmetic effects in the first user interface 402 in accordance with various embodiments. In the example shown, the user taps on the thumbnail graphical representation 408 corresponding to the desired cosmetic effect (e.g., application of lipstick). This may be achieved through the user tapping on a touchscreen display of the computing device 102. Alternatively, the user may use a mouse or other device for selecting the desired cosmetic effect.

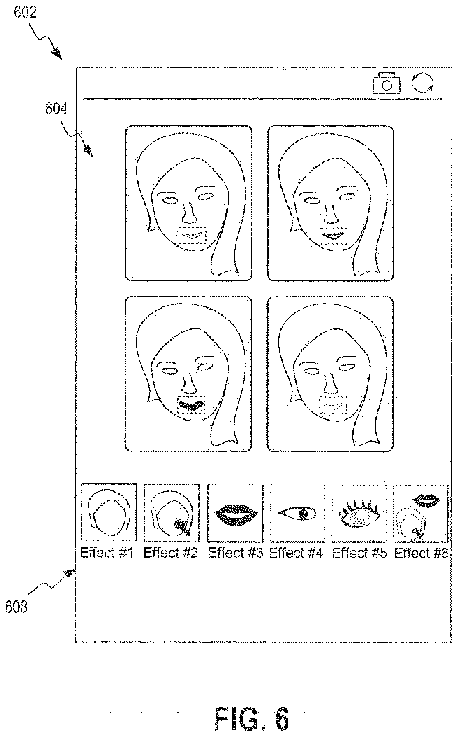

FIG. 6 illustrates an example of a second user interface 602 provided on a display of the computing device 102. As shown, the second user interface 602 includes an array of sub-windows 604 that each depicts virtual application of a cosmetic effect on the facial region of the user. Specifically, each of the sub-windows 604 depicts application of a variation of the cosmetic effect corresponding to the selected graphical thumbnail representation in FIG. 5, and each of the plurality of sub-windows 604 correspond to one of the makeup templates 128 in the dataset 118 (FIG. 1). In the example shown, each makeup template specifies a variation of the selected cosmetic effect (*e.g.,* a different color of lipstick). Displaying the array of sub-windows 604 at the same time allows the user to quickly and efficiently evaluate how the selected cosmetic effect (*e.g.,* application of lipstick) looks on the facial region of the user and allows the user to select the desired makeup template.

As with the first user interface 402 (FIG. 4), the second user interface 602 similarly includes a plurality of graphical thumbnail representations 608 that each correspond to a cosmetic effect. In the event that the user wishes to select a cosmetic effect different than the one currently selected, the user may select one of the graphical thumbnail representations 608 in the second user interface 602 to display an array of sub-windows 604 corresponding to the selected cosmetic effect.

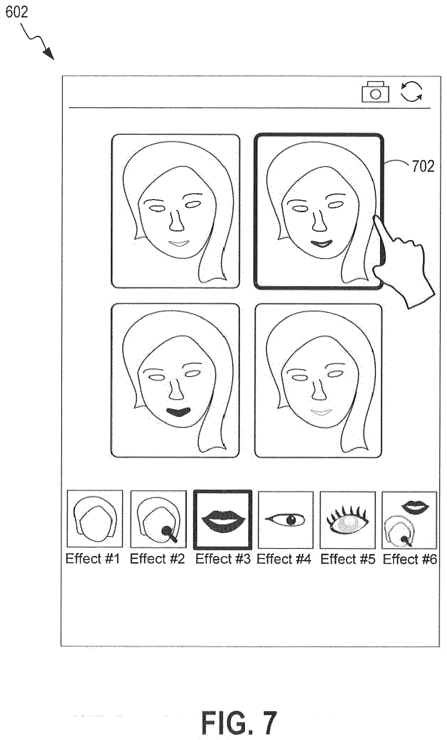

FIG. 7 illustrates selection of one of the sub-windows 702 in the second user interface 602 in accordance with various embodiments. In the example shown, the user taps on the desired sub-window 702 corresponding to the desired makeup template associated with the desired cosmetic effect (e.g., a desired color of lipstick). This may be achieved through the user tapping on a touchscreen display of the computing device 102. Alternatively, the user may use a mouse or other device for selecting the desired cosmetic effect.

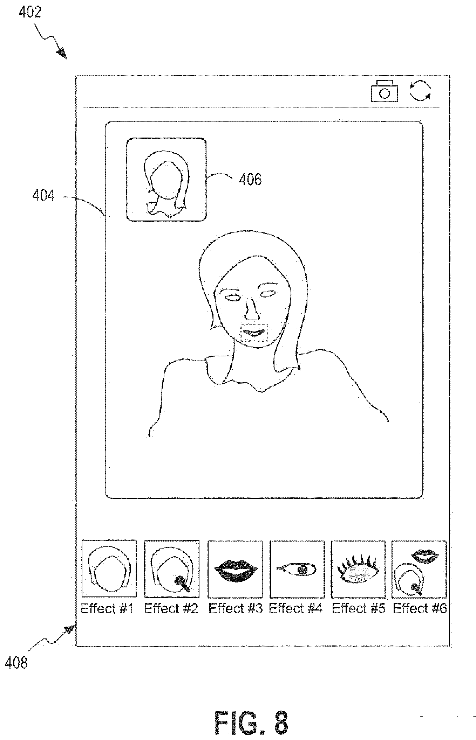

FIG. 8 illustrates transition by the computing device 102 from the second user interface 602 (FIG. 6) back to the first user interface 402 upon selection of one of the sub-windows 702 (FIG. 7). Selection of one of the sub-windows 702 in the second user interface 602 causes the computing device 102 to transition back to the first user interface 402, where the virtual mirror window 404 is updated and now depicts virtual application of the cosmetic effect associated with the selected sub-window 702 (*e.g*., the selected color of lipstick).

The updated first user interface 402 includes a second window 406 that depicts a live video feed of the makeup professional. As discussed above, the second window 406 depicting the live video feed of the makeup professional may be implemented as a picture-in-picture (PIP) window displayed in the virtual mirror window 404 depicting the live video feed of the user's facial region. The first user interface 402 also includes a plurality of graphical thumbnail representations 408 that each correspond to a particular cosmetic effect. The user may select one of the plurality of graphical thumbnail representations 408 to select a different cosmetic effect to evaluate.

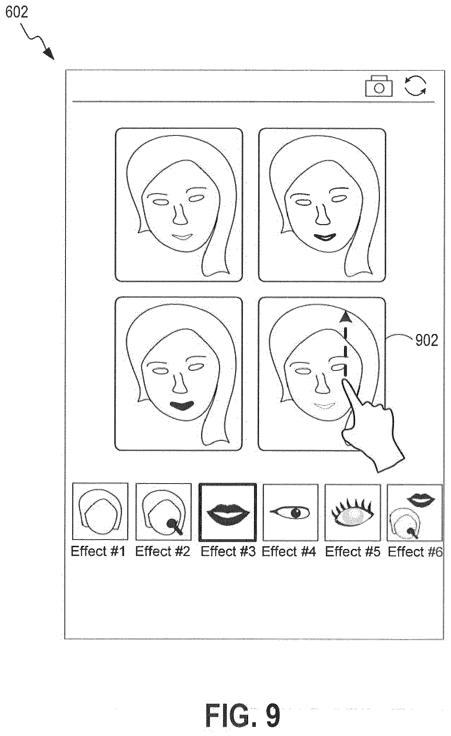

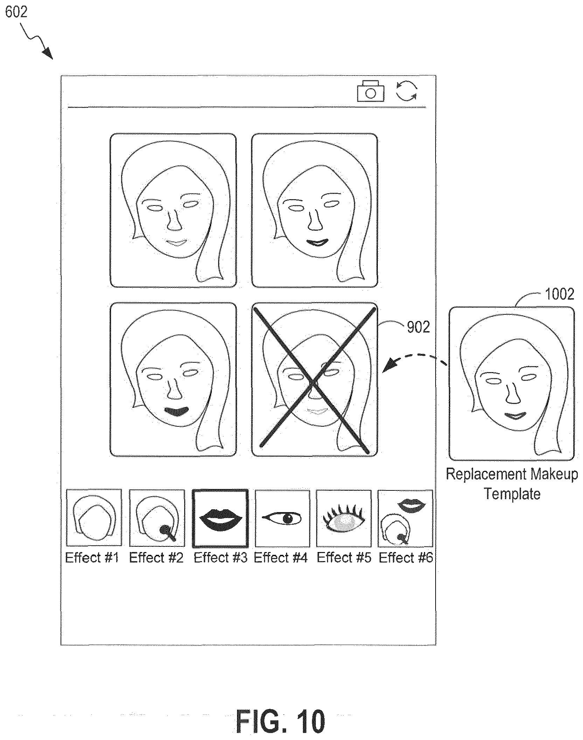

FIG. 9 illustrates use of a gesture performed in the second user interface 602 for removing an unwanted sub-window. In the example shown, the user performs a gesture (upward swipe) on one of the sub-windows 902. As shown in FIG. 10, this causes the sub-window 902 to be removed from view. In some embodiments, a void is left in the area previously occupied by the sub-window 902 removed by the user. In other embodiments, the unwanted sub-window 902 is replaced with another sub-window, where the replacement sub-window corresponds to a different makeup template 128 in the dataset 118 (FIG. 1). This replacement makeup template 128 may be retrieved based on the usage data corresponding to the replacement makeup template 128. For example, a particular replacement makeup template 128 may be retrieved based on recent selection of that particular makeup template 128.

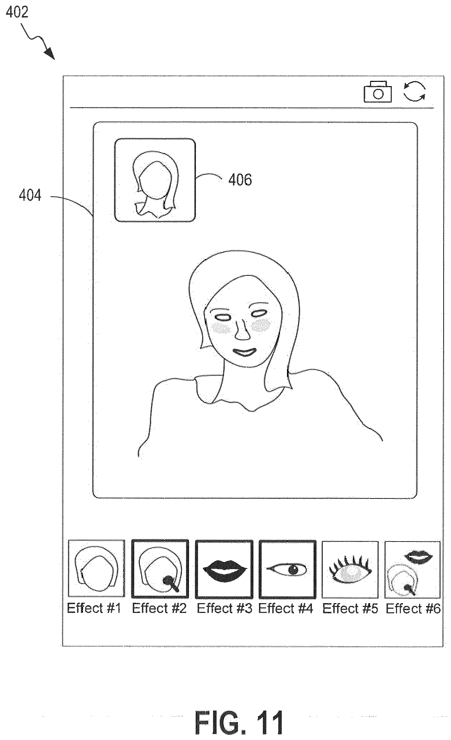

FIG. 11 illustrates the first user interface 402 after multiple iterations where the user has selected multiple cosmetic effects (Effect #2, Effect #3, Effect #4) associated with makeup templates 128 (FIG. 1). Note that the cosmetic effects may correspond to the same makeup template 128 or to different makeup effect 128. That is, depending on the user's preferences, Effect #2 may be have been selected from a first makeup template 128, Effect #3 may have been selected from another makeup template 128, and Effect #4 may have been selected from yet another makeup template 128. It is also possible that all three effects were selected from the same makeup template 128. In the example shown, all the selected cosmetic effects are virtually applied to the facial region of the user in the virtual mirror window 404.

It should be emphasized that the above-described embodiments of the present disclosure are merely possible examples of implementations set forth for a clear understanding of the principles of the disclosure. Many variations and modifications may be made to the above-described embodiment(s) without departing substantially from the spirit and principles of the disclosure. All such modifications and variations are intended to be included herein within the scope of this disclosure and protected by the following claims.

## Claims

1. A method implemented in a client device, comprising:
initiating a video conferencing session with a remote computing device utilized by a makeup professional;
accessing a dataset in a data store, the dataset comprising a plurality of makeup templates, wherein each of the makeup templates specifies application of cosmetic effects for achieving a different cosmetic result;
displaying a first user interface to a user of the client device, the first user interface comprising a virtual mirror window depicting a live video feed of a facial region of the user, a second window depicting a live video feed of the makeup professional, and a plurality of graphical thumbnail representations, each of the graphical thumbnail representations corresponding to a cosmetic effect;
obtaining a selection of one of the graphical thumbnail representations and displaying a second user interface to the user, the second user interface comprising a plurality of sub-windows each depicting virtual application of a cosmetic effect corresponding to the selected graphical thumbnail representation, each of the plurality of sub-windows corresponding to one of the makeup templates in the dataset; and
obtaining a selection of one of the sub-windows in the second user interface and transitioning back to the first user interface, the first user interface comprising the virtual mirror window depicting virtual application of the cosmetic effect associated with the selected sub-window.

2. The method of claim 1, wherein upon obtaining a selection of one of the sub-windows in the second user interface and transitioning back to the first user interface, the first user interface further comprises the second window depicting the live video feed of the makeup professional.

3. The method of claim 1 or 2, wherein in the first user interface, the second window depicting the live video feed of the makeup professional comprises a picture-in-picture (PIP) window displayed in the virtual mirror window depicting the live video feed of the user's facial region.

4. The method of one of claims 1 to 3, wherein the second user interface further comprises the plurality of graphical thumbnail representations, each of the graphical thumbnail representations corresponding to a cosmetic effect.

5. The method of one of claims 1 to 4, further comprising:
obtaining a gesture on one of the plurality of sub-windows in the second user interface; and
replacing the sub-window on which the gesture was performed with another sub-window associated with a different makeup template.

6. The method of claim 5, wherein the gesture is obtained by detecting one of: the gesture performed on a touchscreen interface of the client device; or the gesture performed using a mouse device coupled to the client device.

7. The method of one of claims 1 to 6, wherein accessing the dataset in the data store is performed responsive to selection of the dataset by the makeup professional via the remote computing device.

8. The method of one of claims 1 to 7, wherein the plurality of makeup templates in the dataset is randomly selected based on one or more brands of makeup products.

9. The method of one of claims 1 to 8, wherein accessing the dataset in the data store is performed responsive to selection of the dataset by the user of the client device.

10. The method of one of claims 1 to 9, wherein a predetermined number of sub-windows is displayed in the second user interface, wherein the displayed number of sub-windows corresponds to a predetermined number of makeup templates in the dataset.

11. The method of claim 10, wherein the predetermined number of sub-windows displayed in the second user interface corresponding to the predetermined number of makeup templates correspond to one of: the most utilized makeup templates in the dataset; or the most recently utilized makeup templates in the dataset.

12. A system, comprising:
a display;
a memory storing instructions;
a processor coupled to the memory and configured by the instructions to at least perform a method of one of claims 1 to 11.

13. A non-transitory computer-readable storage medium storing instructions to be implemented by a computing device having a processor, wherein the instructions, when executed by the processor, cause the computing device to at least perform a method of one of claims 1 to 11
